# EUROPEAN PATENT SPECIFICATION

(11) **EP 3 879 477 B1**
(45) Date of publication and mention of the grant of the patent: **17.09.2025**
(21) Application number: 19912085.8
(22) Date of filing: 07.11.2019
(51) Int. Cl.: G06Q 20/38, G06F 9/451, G06Q 20/12, G06Q 50/00

(54) **ELECTRONIC CERTIFICATE-BASED INTERACTION METHOD AND APPARATUS, AND ELECTRONIC DEVICE**
VERFAHREN UND EINRICHTUNG FÜR ELEKTRONISCHEM ZERTIFIKAT BASIERENDE INTERAKTION UND ELEKTRONISCHE VORRICHTUNG
PROCÉDÉ ET APPAREIL D'INTERACTION BASÉS SUR UN CERTIFICAT ÉLECTRONIQUE, ET DISPOSITIF ÉLECTRONIQUE

(30) Priority: 25.01.2019 CN 201910073692
(43) Date of publication of application: 15.09.2021
(73) Proprietor: Advanced New Technologies Co., Ltd., George Town, Grand Cayman KY1-9008 (KY)
(72) Inventor: JI, Jing, Hangzhou, Zhejiang 311121 (CN); SONG, Ximiao, Hangzhou, Zhejiang 311121 (CN)
(74) Representative: Goddar, Heinz J.
(86) International application number: PCT/CN2019/116317
(87) International publication number: WO 2020/151302

(56) References cited:
- WO-A1-2018/107994
- WO-A1-2018/203914
- CN-A- 104 899 727
- CN-A- 106 997 545
- CN-A- 108 282 471
- CN-A- 108 540 947
- CN-A- 110 060 052
- JP-A- 2016 004 293
- US-A1- 2021 337 036

## Description

### TECHNICAL FIELD

The present application relates to the field of communications technologies, and in particular, to electronic-certificate-based interaction methods and apparatuses, and electronic devices.

### BACKGROUND

With development of network technologies, various virtual object allocation methods emerge. For example, for allocation of a virtual object in a form of a "red packet", a user can put e-gift cards, cash gift, etc. into a "red packet", and then separately send the "red packet" to a certain user or send the "red packet" to a group and all members in the group open the red packet. However, as virtual object allocation scenarios are becoming more abundant, how to improve interaction and interest in virtual object allocation is of great significance for improving user experience.

WO2018/107994 A1 discloses a system where users can collect, using a client device, electronic certificates and, once they finish the collection, obtain a "red envelope", e.g., a gift voucher or cash prize.

### SUMMARY

The present specification provides an electronic-certificate-based interaction method according to claim 1, a storage medium according to claim 8 and a system according to claim 9. Preferential ways of implementing the invention are set out in the dependent claims.

The present specification provides a new interaction mode in a virtual object allocation scenario in which a user collects multiple categories of electronic certificates to obtain an allocation permission of a virtual object. In this scenario, the user can initiate an interaction operation to select a second user from a list of users that have social relationships with the user and hold electronic certificates, to trigger a client device to send an electronic certificate acquisition request to a server; and the server selects a first electronic certificate from electronic certificates held by the second user, generates a second electronic certificate of the same category as the first electronic certificate, and delivers the generated second electronic certificate to the client device.

On one hand, the first user can interact with the second user that has a social relationship with the first user, to obtain an electronic certificate of the same category as an electronic certificate held by the second user, thereby significantly improving interaction and interest of the first user in electronic certificate collection.

On the other hand, after selecting the first electronic certificate from the electronic certificates held by the second user, the server does not directly forward the first electronic certificate held by the second user to the first user, but generates the new second electronic certificate of the same category as the first electronic certificate, and then delivers the second electronic certificate to the first user. Therefore, the second user can continue to hold the first electronic certificate, so that the electronic certificate held by the second user can be randomly shared with the first user without a decrease in a quantity of electronic certificates held by the second user.

### BRIEF DESCRIPTION OF DRAWINGS

FIG. 1 is a flowchart illustrating an electronic-certificate-based interaction method according to an example embodiment;
FIG. 2 is a schematic diagram illustrating an electronic certificate display interface according to an example embodiment;
FIG. 3 is a schematic diagram illustrating user-initiated interaction according to an example embodiment;
FIG. 4 is a schematic diagram illustrating interaction between a user and another user according to an example embodiment;
FIG. 5 is a schematic structural diagram illustrating an electronic device according to an example embodiment;
FIG. 6 is a block diagram illustrating an electronic-certificate-based interaction apparatus according to an example embodiment; and
FIG. 7 is a block diagram illustrating another electronic-certificate-based interaction apparatus according to an example embodiment.

### DESCRIPTION OF IMPLEMENTATIONS

In some virtual object allocation scenarios, a user can collect multiple categories of electronic certificates, and obtain an allocation permission of a virtual object in a predetermined virtual resource set when a category quantity of collected electronic certificates reaches a predetermined threshold.

For example, the virtual object is a virtual red packet. In a shown red packet sending scenario of "collect five blessings to share the big prize", the electronic certificates can include five categories of virtual blessing cards: "longevity and health blessing", "kindliness blessing", "prosperity blessing", "harmony blessing", and "wealth blessing". The user can collect the blessing cards in multiple methods and correspondingly obtain a red packet receiving permission after collecting the five categories of virtual blessing cards, and a server sends a red packet to the user.

The present specification provides a new interaction mode based on the previously shown virtual object allocation scenario.

In this new interaction mode, the user can interact with another user that has a social relationship with the user, to share an electronic certificate held by the another user without a decrease in a quantity of electronic certificates held by the another user.

To make a person skilled in the art understand the technical solutions in the present application better, the following clearly and comprehensively describes the technical solutions in the embodiments of the present application with reference to the accompanying drawings in the embodiments of the present application. Clearly, the described embodiments are merely some but not all of the embodiments of the present application. All other embodiments obtained by a person of ordinary skill in the art based on the embodiments of the present application without creative efforts shall fall within the protection scope of the present application.

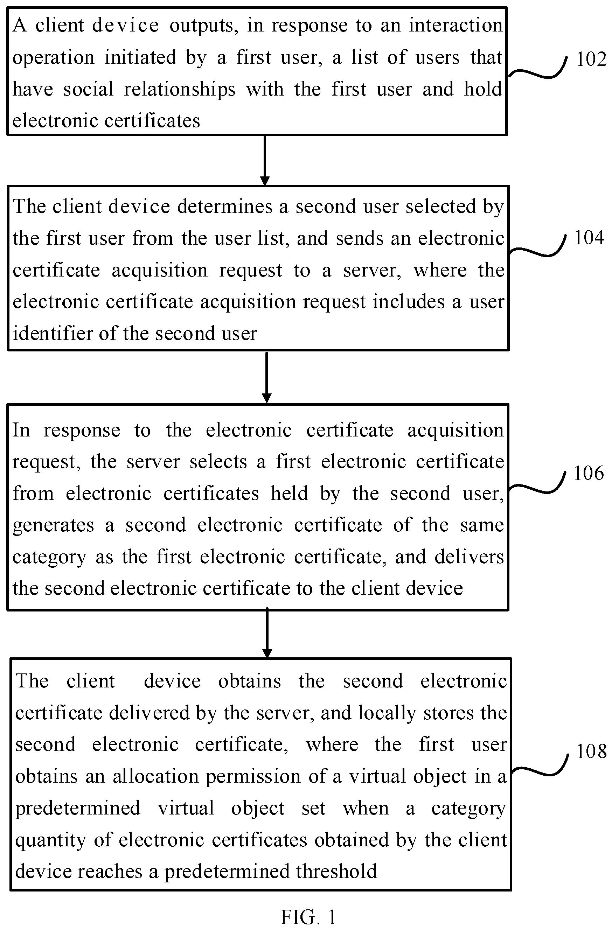

FIG. 1 illustrates an electronic-certificate-based interaction method according to an embodiment of the present application. The method includes the following steps:
Step 102: A client device outputs, in response to an interaction operation initiated by a first user, a list of users that have social relationships with the first user and hold electronic certificates.
Step 104: The client device determines a second user selected by the first user from the user list, and sends an electronic certificate acquisition request to a server, where the electronic certificate acquisition request includes a user identifier of the second user.
Step 106: In response to the electronic certificate acquisition request, the server selects a first electronic certificate from electronic certificates held by the second user, generates a second electronic certificate of the same category as the first electronic certificate, and delivers the second electronic certificate to the client device.
Step 108: The client device obtains the second electronic certificate delivered by the server, and locally stores the second electronic certificate, where the first user obtains an allocation permission of a virtual object in a predetermined virtual object set when a category quantity of electronic certificates obtained by the client device reaches a predetermined threshold.

The virtual object can include any category of virtual article that can be allocated and sent online. For example, in a shown implementation, the virtual object can be a "virtual red packet" in a red packet sending scenario.

The electronic certificate is a certificate used by the user to obtain the virtual object from the server. In practice, a certain quantity of electronic certificates of different categories can be preconfigured in the server, and the server can deliver different categories of electronic certificates to specific user groups based on a certain delivery rule. The electronic certificate is a character string, a number, or a password.

The first user can be an obtaining party of the virtual object. The client device can be a client device used by the first user to obtain the virtual object. For example, when the client device is installed in any electronic device, after logging in to the client device by using a registered account, the first user can interact with the server by using the client device, to obtain the virtual object.

The second user can be a user that has a social relationship with the first user. In the present specification, the first user can interact with the second user to share an electronic certificate held by the second user.

The following describes the technical solutions in the present specification in detail by using an example in which the virtual object is a "virtual red packet". It is worthwhile to emphasize that, the "virtual red packet" is merely an example of the virtual object. In practice, the virtual object can alternatively be a virtual article that can be allocated and sent online other than the "virtual red packet", such as an electronic shopping voucher or an electronic coupon.

In the present specification, a certain quantity of electronic certificates of different categories can be preconfigured in the server, and the server centrally manages the preconfigured electronic certificates.

The preconfigured electronic certificate is the unique certificate used by the user to obtain a red packet sending permission. A quantity and a category quantity of preconfigured electronic certificates can be set based on an actual need.

The first user can collect electronic certificates by using the client device, and obtain a red packet allocation permission when a category quantity of collected electronic certificates reaches the predetermined threshold. The category quantity is a type quantity of electronic certificates collected by the user. A specific value of the predetermined threshold is not limited in the present application and can be determined based on an actual need in practice.

In the present specification, the first user can collect electronic certificates by using the client device in multiple methods, and an electronic certificate collection method is not specifically limited in the present specification.

For example, in a shown collection method, the first user can collect, by using the client device, an electronic certificate actively sent by the server when the first user satisfies a sending condition, or can collect an electronic certificate given by another user that has a social relationship with the first user.

In another shown method, the client device can be an AR (Augmented Reality) client device, and the first user can perform image scanning on a specific offline target by using the AR client device, to trigger the server to send an electronic certificate to the user.

For example, the first user can perform, by using the AR client device, image scanning on a predetermined graphical identifier deployed offline, to trigger the server to send an electronic certificate to the first user, or the first user can perform image scanning on a face of any or a specific task by using the AR client device, to trigger the server to send an electronic certificate to the first user.

In practice, in addition to the previously described collection methods, the first user can interact with another user that has a social relationship with the first user, to obtain an electronic certificate held by the another user.

In a shown implementation, the server can send some virtual items to the user in addition to the electronic certificate, and the user can use these virtual items to "grab" an electronic certificate held by another user.

For example, in implementation, these virtual items can be special electronic certificates. After "using" these special electronic certificates, the user can select a specific user from other users having social relationships with the user, and randomly select an electronic certificate from electronic certificates held by the specific user, and the user keeps the electronic certificate.

In practice, although the first user can achieve electronic certificate collection by using a virtual item sent by the server to "grab" an electronic certificate held by another user, a quantity of electronic certificates held by the user serving as a grabbed party decreases. Therefore, interaction experience of the second user may be affected to some extent.

Based on the previous description, the present specification provides an interaction mode in which the first user shares an electronic certificate held by another user that has a social relationship with the first user without a decrease in a quantity of electronic certificates held by the another user.

In this interaction mode, the server can still send some virtual items to the user. The first user can use these virtual items to trigger the server to select an electronic certificate from electronic certificates held by another user, "duplicate" the electronic certificate, and deliver a "duplicated" electronic certificate to the first user.

In the present specification, after the first user obtains an electronic certificate by using the client device in either of the previously shown collection methods, the client device can generate a corresponding display picture for the obtained electronic certificate, and add the generated display picture to a display position corresponding to the electronic certificate in an electronic certificate display interface to display the generated display picture to the first user, to locally store the electronic certificate.

The display picture generated by the client device for the electronic certificate can correspond to a category of the electronic certificate, that is, display pictures corresponding to different categories of electronic certificates can be different from each other. Content displayed on the display picture is not specifically limited.

The display position provided by the client device in the electronic certificate display interface can also correspond to the category of the electronic certificate, and different display positions can separately correspond to different categories of electronic certificates, that is, different categories of electronic certificates can separately correspond to different display positions in the electronic certificate display interface.

The first user can also give an electronic certificate displayed in the electronic certificate display interface to another user having a social relationship with the first user.

In a shown implementation, the first user can trigger a display picture added to a display position, to give an electronic certificate corresponding to the display picture to another user.

For example, if the first user wants to give a certain category of held electronic certificate to another user, the first user can perform a trigger operation, such as tapping, to trigger a display picture corresponding to the electronic certificate that is displayed in the electronic certificate display interface. After detecting the trigger operation of the first user for the display picture, the client device can output a detail interface of the electronic certificate corresponding to the display picture in response to the trigger operation.

The detail interface of the electronic certificate can be specifically used to display detail information of the electronic certificate to the user. A share option can be provided in the detail interface of the electronic certificate. For example, when the electronic certificate is a virtual card, the share option can be specifically a trigger button of "send a card to a friend".

After the first user performs a predetermined trigger operation, such as tapping, to trigger the share option, the client device can output a share method selection interface. Several categories of target applications that can be selected by the user can be provided in the selection interface. At this time, the first user can select a corresponding target application in the selection interface, and then further select a target user that the first user wants to share the electronic certificate with at this time in the target application. After the selection, the client device can send the electronic certificate to the target user selected by the user.

When the first user shares the electronic certificate with the target user, if the target user is a contact or a friend of the first user in the client device, the first user can share the electronic certificate with the target user inside the client device. In this case, the client device can transmit the electronic certificate that needs to be shared to a client device of the target user by using the server.

Certainly, if the target user is not a contact or a friend of the user in the client device but a contact or a friend of the first user in a third-party client device, the first user can also share the electronic certificate with the target user by using the third-party client device. In this case, the client device can generate, by using the server, a corresponding access link for the electronic certificate that needs to be shared, and then share the generated access link with the target user by using the third-party client device.

Further, a display position corresponding to a virtual item sent by the server to the user can be provided in the electronic certificate display interface in addition to the display position corresponding to the electronic certificate. If the server also sends multiple categories of virtual items to the user, a corresponding display position can be provided for each category of virtual item in the electronic certificate display interface.

In this case, when the first user obtains, by using the client device, a virtual item sent by the server, a corresponding display picture can also be generated for the obtained virtual item, and then the generated display picture is added to a display position corresponding to the virtual item in the electronic certificate display interface to display the generated display picture to the first user, to locally store the virtual item.

In a shown implementation, the first user can trigger the display picture corresponding to the virtual item that is displayed in the electronic certificate display interface, to "use" the virtual item corresponding to the display picture to interact with the second user having the social relationship with the first user, to obtain an electronic certificate held by the second user without a decrease in a quantity of electronic certificates held by the second user.

For example, the first user can perform a trigger operation, such as tapping, to trigger the display picture corresponding to the virtual item that is displayed in the electronic certificate display interface. After detecting the trigger operation of the first user for the display picture, the client device can output a detail interface of the virtual item corresponding to the display picture in response to the trigger operation.

The detail interface of the virtual item can be specifically used to display detail information of the virtual item to the user. An interaction option can be provided in the detail interface of the virtual item. For example, if the virtual item is a special virtual blessing card "share blessing card", the interaction option can be specifically an interaction button of "to share blessing".

After the first user performs a predetermined trigger operation, such as tapping, to trigger the interaction option:
on one hand, the client device can immediately communicate with the server to obtain the list of users that have social relationships with the first user and hold electronic certificates from the server; and
on the other hand, the client device can output an interaction interface corresponding to the interaction option, and output the obtained list of users that have social relationships with the first user and hold electronic certificates to the first user by using the interaction interface.

A quantity of electronic certificates held by each user in the user list can also be outputted to the first user in the interaction interface in addition to the user list. at the same time, a corresponding selection option can be provided for each selectable user in the user list. The first user can trigger the selection option in a trigger method, such as tapping, to select the user corresponding to the selection option as an interaction object.

It is worthwhile to note that, in practice, the first user can implement interaction in other methods in addition to the previously described method of initiating interaction by "using" the virtual item, that is, in the present specification, an interaction operation initiated by the first user can be other forms of interaction operations in addition to the interaction operation initiated by "using" the virtual item. The other forms of interaction operations are not listed in the present specification one by one.

In the present specification, the interaction object selected by the first user from the user list is referred to as a second object. After the first user performs the selection operation in the user list, the client device can obtain the second user selected by the first user from the user list.

In a shown implementation, after the first user selects the second user from the user list, the client device can query the server for the total quantity of electronic certificates held by the second user, and output an electronic certificate selection interface corresponding to the second user to the first user.

The electronic certificate selection interface can include several selectable graphical options. These graphical options are kept consistent with the electronic certificates actually held by the second user in quantity. At this time, the first user can select a graphical option from these graphical options in a trigger method, such as tapping, to simulate a process of drawing an electronic certificate from the electronic certificates held by the second user.

After detecting a trigger operation of the first user for any graphical option, the client device can send an electronic certificate acquisition request to the server in response to the detected trigger operation. The electronic certificate acquisition request can include the user identifier of the second user, such as a social account of the second user.

In the present specification, after receiving the electronic certificate acquisition request sent by the client device, the server can read the user identifier of the second user from the electronic certificate acquisition request, query a database for all the electronic certificates held by the second user, select a first electronic certificate for the first user from all the electronic certificates held by the second user, and deliver the selected first electronic certificate to the first user.

When selecting the electronic certificate for the first user from all the electronic certificates held by the second user, the server can specifically randomly select the electronic certificate from all the electronic certificates held by the second user by using a specific random algorithm.

In a shown implementation, a corresponding selection probability value can be preconfigured for each category of electronic certificate in the server, and selection probability values corresponding to different electronic certificates can be different from each other.

For example, an operator of the server can set a relatively small selection probability value for one or more categories of electronic certificates based on an actual service need, to strictly control the possibility that the one or more categories of electronic certificates are shared with another user.

When selecting the electronic certificate for the first user from all the electronic certificates held by the second user, the server can randomly select the first electronic certificate for the first user from the electronic certificates held by the second user strictly based on the selection probability value of each category of electronic certificate.

Because selection probability values of all categories of electronic certificates are different, there is a corresponding relatively low probability that an electronic certificate with a relatively small selection probability value that is held by the second user is randomly selected, and there is a corresponding relatively high probability that an electronic certificate with a relatively large selection probability value that is held by the second user is randomly selected.

In a shown implementation, the server can further set a drawing probability value for the first user. The drawing probability value represents the probability that the first user can successfully obtain an electronic certificate held by the second user after using the previously described virtual item.

A method of calculating the drawing probability value is not specifically limited in the present specification.

In a shown implementation, the server can specifically set a drawing probability value for the first user based on a category quantity of electronic certificates actually held by the second user.

Specifically, the server can perform weighting calculation on the selection probability values of all the categories of electronic certificates actually held by the second user, and then use a value obtained after the weighting calculation as the drawing probability value corresponding to the first user.

For example, a same weighting factor can be set for each category of electronic certificates. In this case, the weighting calculation can be specifically performing summation calculation on the selection probability values of all the categories of electronic certificates actually held by the second user, that is, a sum of the selection probability values of all the categories of electronic certificates actually held by the second user is the drawing probability value corresponding to the first user. Certainly, in practice, a person skilled in the art can flexibly set a weighting value for each category of electronic certificate based on an actual need.

As such, the category quantity of electronic certificates actually held by the second user directly determines the probability that the first user successfully obtains an electronic certificate held by the second user after using the previously described virtual item. A larger category quantity of electronic certificates actually held by the second user indicates a larger finally obtained drawing probability value of the first user and a higher probability that the first user successfully obtains an electronic certificate held by the second user. On the contrary, a smaller category quantity of electronic certificates actually held by the second user indicates a smaller finally obtained drawing probability value of the first user and a lower probability that the first user successfully obtains an electronic certificate held by the second user.

It is worthwhile to note that, when selecting the first electronic certificate for the first user from the electronic certificates held by the second user, the server can select the electronic certificate from the electronic certificates held by the second user based on a preconfigured rule in addition to randomly selecting the electronic certificate from the electronic certificates held by the second user in the previously described method.

The preconfigured rule can be flexibly configured based on an actual need, and is not specifically limited in the present specification.

For example, the server can perform big data analysis based on user data deposited by the first user in the server, to obtain an activity score of the first user. In this case, the preconfigured rule can be the following: when the activity score of the first user is greater than a predetermined threshold, a category absent from all electronic certificates currently collected by the first user can be preferentially selected for the first user from the electronic certificates held by the second user.

After selecting the first electronic certificate for the first user from the electronic certificates held by the second user, the server can perform, based on the drawing probability value of the first user, decision control on whether the first user draws the first electronic certificate at this time, and determine, based on a decision control result, whether the first user draws the first electronic certificate.

If the decision control result indicates that the first user successfully draws the first electronic certificate at this time, the server can generate a new second electronic certificate of the same category as the first electronic certificate, and then deliver the generated new second electronic certificate to the client device.

Because the server generates the new second electronic certificate of the same category based on the category of the first electronic certificate and finally delivers the generated new second electronic certificate to the first user, the quantity of electronic certificates held by the second user does not decrease, which is equivalent to that the server "duplicates" the first electronic certificate held by the second user once, and delivers a "duplicated" electronic certificate to the first user.

After receiving the second electronic certificate delivered by the server, the client device can generate a corresponding display picture in the same method described above, and add the display picture to a corresponding display position in the electronic certificate display interface to display the display picture to the first user.

Certainly, if the decision control result indicates that the first user fails to draw the first electronic certificate at this time, the server can return a prompt that the first user fails to obtain the electronic certificate held by the second user to the client device. For example, the prompt can be specifically a prompt message that prompting that the user fails to draw the electronic certificate at this time.

According to the invention, each time the server "duplicates" the first electronic certificate held by the second user, a quantity of "duplicate" times is calculated. Before selecting the electronic certificate for the first user from all the electronic certificates held by the second user, the server first checks whether a quantity of "duplicate" times of the electronic certificates held by the second user reaches a predetermined threshold. If the quantity of "duplicate" times of the electronic certificates held by the second user reaches the predetermined threshold, in this case, the server directly terminates a process in which the first user "duplicates" the electronic certificate from the electronic certificates held by the second user, and return prompt information to the client device that electronic certificate obtaining failed. For example, if the virtual item is a special virtual blessing card "share blessing card", the prompt information can be specifically a prompt message "the friend is shared too many times, please try another person".

Certainly, if the quantity of "duplicate" times of the electronic certificates held by the second user does not reach the predetermined threshold, in this case, the server can further select the electronic certificate for the first user from all the electronic certificates held by the second user. A specific process is omitted for simplicity. In the present specification, after the first user collects the electronic certificate by using the previously described collection method, the client device can further determine, in real time in the background, whether a category quantity of locally stored electronic certificates reaches a predetermined threshold. If the category quantity of locally stored electronic certificates reaches the predetermined threshold, in this case, the first user is able to obtain the red packet allocation permission.

In this case, the client device can send a red packet allocation request (which is equivalent to the previously described virtual object allocation request) to the server, and the red packet allocation request includes several electronic certificates.

In a shown implementation, both a quantity and a category quantity of electronic certificates included in the red packet allocation request can be the predetermined threshold, so that the server can obtain the electronic certificates included in the red packet allocation request and then perform verification after receiving the red packet allocation request.

It is worthwhile to note that an operation of sending the red packet allocation request to the server by the client device can be manually triggered by the user, or can be automatically triggered by the client device when the client device determines that a quantity of collected electronic certificates reaches a first quantity.

For example, in a case, when determining, in the background, that the quantity of collected electronic certificates reach the first quantity, the client device can automatically initiate the red packet allocation request to the server. In another case, a trigger button used to trigger the client device to initiate an object allocation request to the server can be provided at a display position corresponding to the electronic certificates. When determining, in the background, that the quantity of collected electronic certificates reaches the predetermined threshold, the client device can output a prompt (for example, output a related special animated effect) to the user, to prompt that the user is able to obtain the red packet allocation permission currently. Then, the client device can send the red packet allocation request to the server in response to a trigger operation of the user for the trigger button.

After receiving the red packet allocation request sent by the client device, the server can verify the category quantity of electronic certificates included in the red packet allocation request. If the server determines that the category quantity of electronic certificates included in the red packet allocation request reaches the predetermined threshold after verifying the electronic certificates included in the red packet allocation request, in this case, the server can grant the user the red packet allocation permission, and immediately send a red packet with a certain amount to the user from a predetermined "red packet fund pool" (equivalent to the previously described predetermined virtual object set) based on a predetermined allocation rule, or send a red packet with a certain amount to the user from a predetermined "red packet fund pool" based on a predetermined allocation rule after specified red packet sending time arrives.

It is worthwhile to note that the allocation rule used by the server to send the red packet to the user from the predetermined "red packet fund pool" can be formulated based on an actual service need.

In a shown implementation, the server can calculate a quantity of all users that have been granted the red packet allocation permission, and calculate an average allocation amount of a total amount of red packets to be sent in the "red packet fund pool" based on the calculated user quantity. In this case, the calculated average allocation amount is a quantity of red packets that need to be sent to each user. In this case, the server can allocate a red packet with a corresponding amount to each user from the "red packet fund pool" based on the calculated average allocation amount.

In another shown implementation, when sending the red packet to the user, the server can randomly draw a red packet with a certain amount for the user from the "red packet fund pool". For example, the server can calculate a random number for the user based on a predetermined random algorithm with reference to the total amount of red packets to be sent in the "red packet fund pool", and then send a red packet with a corresponding amount to the user based on the random number.

Certainly, in practice, other allocation rules can be used in addition to the previously shown allocation rules, and are not listed in the present application one by one.

The following describes the technical solutions in the previously described embodiments in detail with reference to a specific application scenario.

In a shown red packet sending scenario of "collect five blessings to share the big prize", the previously described client device can be a payment client device. The previously described server can be a payment platform interconnected to the payment client device. The previously described virtual object set can be an operator of the payment platform or an enterprise fund account of an enterprise that cooperates with the operator of the payment platform. A fund in the enterprise fund account is a total fund amount used to send red packets to users.

The previously described electronic certificates can include five categories of virtual blessing cards: "longevity and health blessing", "kindliness blessing", "prosperity blessing", "harmony blessing", and "wealth blessing", and the user can automatically obtain a red packet receiving permission after collecting the five categories of virtual blessing cards.

The server can deliver some special virtual blessing cards to the user as virtual items in addition to the five categories of virtual blessing cards. For example, the special virtual blessing card can be a "share blessing card". The user can interact with another user having a social relationship with the user by "using" the share blessing card, to randomly "duplicate" and obtain an electronic certificate held by the another user without a decrease in a quantity of electronic certificates held by the another user.

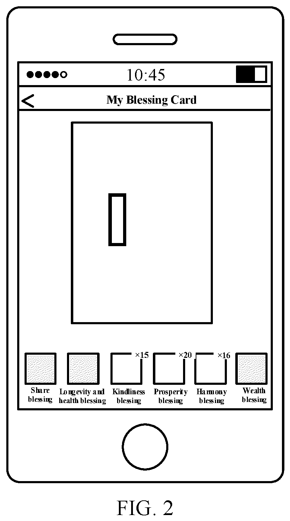

FIG. 2 is a schematic diagram illustrating an electronic certificate display interface according to the present specification.

As shown in FIG. 2, the electronic certificate display interface can be specifically a "my blessing card" interface. In this interface, corresponding display positions can be provided for the previously described five categories of virtual blessing cards and share blessing card held by the user.

Please continue to refer to FIG. 2, in practice, the special virtual blessing cards delivered by the server to the user can further include special blessing cards such as a "wild card" and a "flower card". That is, the operator of the payment platform can flexibly customize virtual items corresponding to various functions for users based on actual needs. The virtual items are not listed in the present specification one by one.

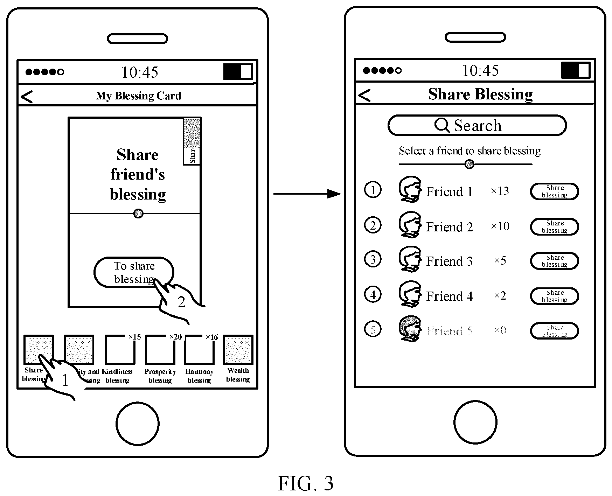

FIG. 3 is a schematic diagram illustrating user-initiated interaction according to the present specification.

As shown in FIG. 3, the user can perform a trigger operation, such as tapping, to trigger a display picture corresponding to the "share blessing card" that is displayed in the "my blessing card" interface, to use the "share blessing card". After detecting the trigger operation of the user for the display picture corresponding to the "share blessing card", in response to the trigger operation, the client device can output a detail interface of the "share blessing card" and output a trigger button (i.e., the previously described interaction option) of "to share blessing" in the detail interface.

Please continue to refer to FIG. 3, the user can perform a trigger operation, such as tapping, to continue to trigger the trigger button of "to share blessing" in the detail interface to enter a "share blessing" interface (i.e., the previously described interaction interface), to select a "friend" that the user wants to interact with. After detecting that the trigger operation of the user for the trigger button of "to share blessing", in response to the trigger operation, the client device can output the "share blessing" interface, and output a list of users that have social relationships with the user and hold "virtual blessing cards" to the user in the "share blessing" interface.

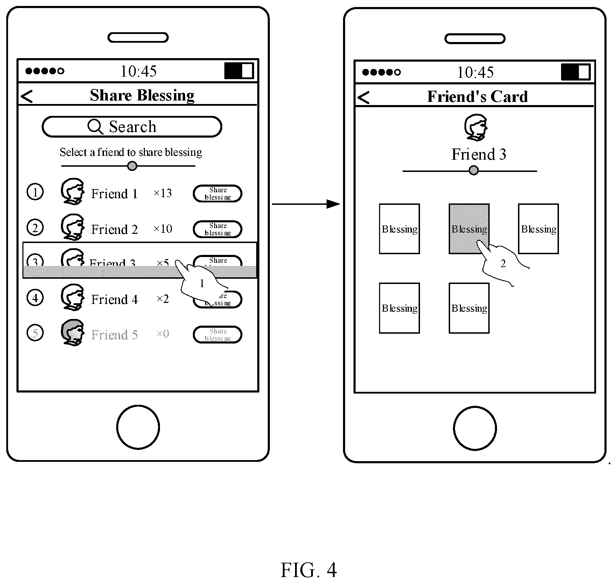

FIG. 4 is a schematic diagram illustrating interaction between a user and another user according to the present specification.

After the client device outputs the user list to the user in the "share blessing" interface, the user can manually select a target friend that the user wants to interact with from the user list. The client device can determine the target friend selected by the user from the user list, output a "friend's card" interface (i.e., the previously described electronic certificate selection interface) corresponding to the target friend to the first user, and display several selectable graphical options in the "friend's card" interface based on a quantity of virtual blessing cards actually held by the target friend. In this case, the user can select a graphical option from these graphical options in a trigger method, such as tapping.

After detecting a trigger operation of the user for any graphical option, in response to the trigger operation, the client device can immediately send an electronic certificate acquisition request to the server, and the electronic certificate acquisition request includes a social account of the second user. After receiving the electronic certificate acquisition request, the server can randomly select a virtual blessing card from virtual blessing cards held by the target friend, "duplicate" the virtual blessing card selected by the user to generate a new virtual blessing card of the same category, and deliver the generated new virtual blessing card to the client device.

When a category quantity of virtual blessing cards collected by the client device reaches 5, the first user can obtain the red packet allocation permission, and the client device can send a "red packet allocation request" (e.g., the previously described virtual object allocation request) to the server, to request the server to allocate a red packet to the first user. A specific implementation process is omitted for simplicity.

In the previously described technical solutions, the user can initiate the interaction operation to select the second user from the list of users that have social relationships with the first user and hold electronic certificates, and trigger the client device to send the electronic certificate acquisition request to the server; and the server randomly selects the first electronic certificate from the electronic certificates held by the second user, generates the second electronic certificate of the same category as the first electronic certificate, and delivers the generated second electronic certificate to the client device.

On one hand, the first user can interact with the second user that has the social relationship with the first user, to obtain an electronic certificate of the same category as an electronic certificate held by the second user, thereby significantly improving interaction and interest of the first user in electronic certificate collection.

On the other hand, after selecting the first electronic certificate from the electronic certificates held by the second user, the server does not directly forward the first electronic certificate held by the second user to the first user, but generates the new second electronic certificate of the same category as the first electronic certificate, and then delivers the second electronic certificate to the first user. Therefore, the second user can continue to hold the first electronic certificate, so that the electronic certificate held by the second user can be randomly shared with the first user without a decrease in the quantity of electronic certificates held by the second user.

Corresponding to the previously described method embodiment, the present application further provides apparatus embodiments.

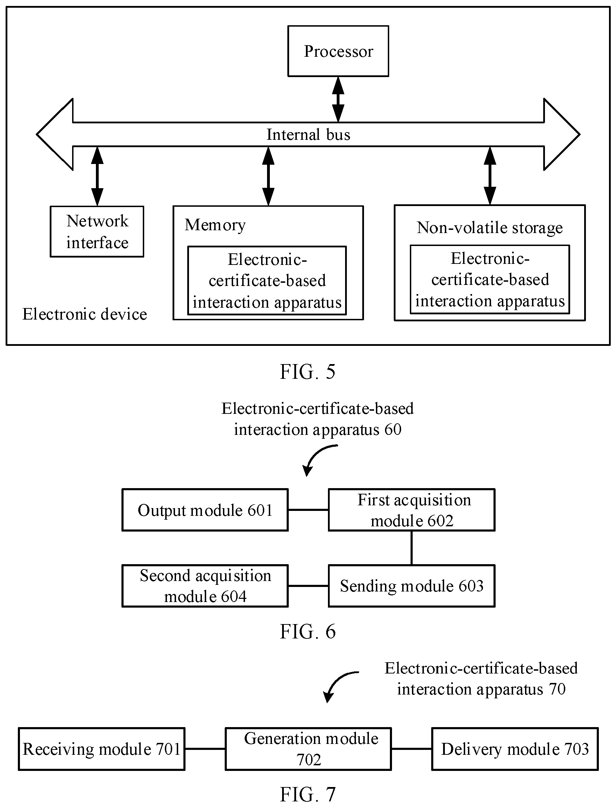

Corresponding to the previously described method embodiment, the present specification further provides an electronic-certificate-based interaction apparatus embodiment. The electronic-certificate-based interaction apparatus embodiment in the present specification can be applied to an electronic device. The apparatus embodiment can be implemented by using software, hardware, or a combination of software and hardware. Software implementation is used as an example. As a logical apparatus, the apparatus is implemented by reading a corresponding computer program instruction from a non-volatile storage to a memory for running by using a processor of an electronic device that the apparatus is located in. In terms of a hardware level, FIG. 5 is a structural hardware diagram illustrating an electronic device that an electronic-certificate-based interaction apparatus is located in according to the present specification. In addition to a processor, a memory, a network interface, and a non-volatile storage shown in FIG. 5, in this embodiment, the electronic device that the apparatus is located in usually can further include other hardware based on actual functions of the electronic device. Details are omitted for simplicity.

FIG. 6 is a block diagram illustrating an electronic-certificate-based interaction apparatus according to an example embodiment of the present specification.

Referring to FIG. 6, the electronic-certificate-based interaction apparatus 60 can be applied to the electronic device shown in FIG. 5, and includes:
an output module 601, configured to output, in response to an interaction operation initiated by a first user, a list of users that have social relationships with the first user and hold electronic certificates;
a first acquisition module 602, configured to obtain a second user selected by the first user from the user list;
a sending module 603, configured to send an electronic certificate acquisition request to a server, where the electronic certificate acquisition request includes a user identifier of the second user, so that the server selects a first electronic certificate from electronic certificates held by the second user, and generates a second electronic certificate of the same category as the first electronic certificate; and
a second acquisition module 604, configured to obtain the second electronic certificate delivered by the server, and locally store the second electronic certificate, where the first user obtains an allocation permission of a virtual object in a predetermined virtual object set when a category quantity of obtained electronic certificates reaches a predetermined threshold.

In the present specification, the second acquisition module 604 is configured to:
generate a corresponding display picture for the obtained electronic certificate; and
add the generated display picture to a display position corresponding to the electronic certificate in an electronic certificate display interface, where
display pictures generated for different categories of electronic certificates are different from each other, and display positions corresponding to different categories of electronic certificates in the electronic certificate display interface are different from each other.

In the present specification, the electronic certificate display interface further includes a display position corresponding to a virtual item; and
the first acquisition module 602 is configured to:
generate a corresponding display picture for an obtained virtual item; and
add the generated display picture to a display position corresponding to the virtual item in an electronic certificate display interface.

In the present specification, the output module 601 is configured to:
output a detail interface corresponding to the virtual item in response to a detected trigger operation of the first user for the display picture corresponding to the virtual item, where the detail interface includes an interaction option; and
output an interaction interface corresponding to the interaction option in response to a trigger operation of the first user for the interaction option, and output the list of users that have social relationships with the first user and hold electronic certificates to the first user by using the interaction interface, the list being obtained from the server.

In the present specification, the sending module 603 is configured to:
output an electronic certificate selection interface to the first user, where the electronic certificate selection interface includes several graphical options corresponding to the electronic certificates held by the second user; and
send the electronic certificate acquisition request to the server in response to a trigger operation of the first user for any one of the several graphical options.

In the present specification, the apparatus further includes:
a determining module 605 (not shown in FIG. 5), configured to determine whether a category quantity of locally stored electronic certificates reaches a predetermined threshold; and
the sending module 603 is further configured to:
   if the category quantity of locally stored electronic certificates reaches the predetermined threshold, send a virtual object allocation request that includes several electronic certificates whose category quantity is the predetermined threshold to the server, so that the server allocates a virtual object to the first user from the predetermined virtual object set based on the virtual object allocation request.

In this embodiment, the virtual object is a virtual red packet.

FIG. 7 is a block diagram illustrating another electronic-certificate-based interaction apparatus according to an example embodiment of the present specification.

Referring to FIG. 7, the electronic-certificate-based interaction apparatus 70 can also be applied to the electronic device shown in FIG. 5, and includes:
a receiving module 701, configured to receive an electronic certificate acquisition request sent by a client device, where the electronic certificate acquisition request includes a user identifier of a second user selected by a first user from a list of users that have social relationships with the first user and hold electronic certificates, the list being output by the client device;
a generation module 702, configured to: in response to the electronic certificate acquisition request, select a first electronic certificate from electronic certificates held by the second user, and generate a second electronic certificate of the same category as the first electronic certificate; and
a delivery module 703, configured to deliver the generated second electronic certificate to the client device, where the first user obtains an allocation permission of a virtual object in a predetermined virtual object set when a category quantity of electronic certificates obtained by the client device reaches a predetermined threshold.

In the present specification, a corresponding selection probability value is predetermined for each category of electronic certificate; and
the generation module 702 is configured to:
randomly select the first electronic certificate for the first user from the electronic certificates held by the second user based on the selection probability value of each category of electronic certificate.

In the present specification, the apparatus 70 further includes:
a calculation module 704 (not shown in FIG. 7), configured to perform weighting calculation on selection probability values of all categories of electronic certificates held by the second user, to obtain a drawing probability value corresponding to the first user; and
the generation module 702 is further configured to:
   before generating the second electronic certificate of the same category as the first electronic certificate, determine, based on the drawing probability value, whether the first user draws the first electronic certificate; and if yes, further generate the second electronic certificate of the same category as the first electronic certificate.

In the present specification, the receiving module 701 is further configured to:
receive an object allocation request sent by the client device, where the object allocation request includes several electronic certificates; and
the apparatus 70 further includes:
   an allocation module 705 (not shown in FIG. 7), configured to determine whether a category quantity of electronic certificates included in the object allocation request reaches a predetermined threshold; and if the category quantity of electronic certificates included in the object allocation request reaches the predetermined threshold, allocate a virtual object to the first user from the predetermined virtual object set based on a predetermined allocation rule.

In the present specification, the virtual object is a virtual red packet.

Because the apparatus embodiment basically corresponds to the method embodiment, for related parts, references can be made to some descriptions in the method embodiment. The previously described apparatus embodiments are merely examples. The modules described as separate parts may or does not have to be physically separate, and parts displayed as modules may or does not have to be physical modules, that is, may be located in one position, or may be distributed on a plurality of network modules. Some or all of the modules can be selected based on actual needs to achieve the objectives of the solutions of the present application. A person of ordinary skill in the art can understand and implement the embodiments of the present specification without creative efforts.

The apparatus or module in the previously described embodiment can be specifically implemented by a computer chip or an entity, or can be implemented by a product with a certain function. A typical implementation device is a computer, and a specific form of the computer can be a personal computer, a laptop computer, a cellular phone, a camera phone, a smartphone, a personal digital assistant, a media player, a navigation device, an e-mail sending/receiving device, a game console, a tablet computer, a wearable device, or any combination of several of these devices.

Corresponding to the previously described method embodiment, the present specification further provides an embodiment of an electronic device. The electronic device includes a processor and a memory configured to store machine executable instructions. The processor and the memory are usually connected to each other by using an internal bus. In another possible implementation, the device may further include an external interface, to be able to communicate with another device or component.

In this embodiment, machine executable instructions corresponding to electronic-certificate-based interaction logic that are stored in the memory are read and executed, to prompt the processor to:
output, in response to an interaction operation initiated by a first user, a list of users that have social relationships with the first user and hold electronic certificates;
obtain a second user selected by the first user from the user list;
send an electronic certificate acquisition request to a server, where the electronic certificate acquisition request includes a user identifier of the second user, so that the server selects a first electronic certificate from electronic certificates held by the second user, and generates a second electronic certificate of the same category as the first electronic certificate; and
obtain the second electronic certificate delivered by the server, and locally store the second electronic certificate, where the first user obtains an allocation permission of a virtual object in a predetermined virtual object set when a category quantity of obtained electronic certificates reaches a predetermined threshold.

In this embodiment, machine executable instructions corresponding to electronic-certificate-based interaction logic that are stored in the memory are read and executed, to prompt the processor to:
generate a corresponding display picture for the obtained electronic certificate; and
add the generated display picture to a display position corresponding to the electronic certificate in an electronic certificate display interface, where
display pictures generated for different categories of electronic certificates are different from each other, and display positions corresponding to different categories of electronic certificates in the electronic certificate display interface are different from each other.

In this embodiment, the electronic certificate display interface further includes a display position corresponding to a virtual item; and machine executable instructions corresponding to electronic-certificate-based interaction logic that are stored in the memory are read and executed, to prompt the processor to:
generate a corresponding display picture for an obtained virtual item; and
add the generated display picture to a display position corresponding to the virtual item in an electronic certificate display interface.

In this embodiment, machine executable instructions corresponding to electronic-certificate-based interaction logic that are stored in the memory are read and executed, to prompt the processor to:
output a detail interface corresponding to the virtual item in response to a detected trigger operation of the first user for the display picture corresponding to the virtual item, where the detail interface includes an interaction option; and
output an interaction interface corresponding to the interaction option in response to a trigger operation of the first user for the interaction option, and output the list of users that have social relationships with the first user and hold electronic certificates to the first user by using the interaction interface, the list being obtained from the server.

In this embodiment, machine executable instructions corresponding to electronic-certificate-based interaction logic that are stored in the memory are read and executed, to prompt the processor to:
output an electronic certificate selection interface to the first user, where the electronic certificate selection interface includes several graphical options corresponding to the electronic certificates held by the second user; and
send the electronic certificate acquisition request to the server in response to a trigger operation of the first user for any one of the several graphical options.

In this embodiment, machine executable instructions corresponding to electronic-certificate-based interaction logic that are stored in the memory are read and executed, to prompt the processor to:
determine whether a category quantity of locally stored electronic certificates reaches a predetermined threshold; and
if the category quantity of locally stored electronic certificates reaches the predetermined threshold, send a virtual object allocation request that includes several electronic certificates whose category quantity is the predetermined threshold to the server, so that the server allocates a virtual object to the first user from the predetermined virtual object set based on the virtual object allocation request.

Corresponding to the previously described method embodiment, the present specification further provides an embodiment of another electronic device. The electronic device includes a processor and a memory configured to store machine executable instructions. The processor and the memory are usually connected to each other by using an internal bus. In another possible implementation, the device may further include an external interface, to be able to communicate with another device or component.

In this embodiment, machine executable instructions corresponding to electronic-certificate-based interaction logic that are stored in the memory are read and executed, to prompt the processor to:
receive an electronic certificate acquisition request sent by a client device, where the electronic certificate acquisition request includes a user identifier of a second user selected by a first user from a list of users that have social relationships with the first user and hold electronic certificates, the list being output by the client device;
in response to the electronic certificate acquisition request, select a first electronic certificate from electronic certificates held by the second user, and generate a second electronic certificate of the same category as the first electronic certificate; and
deliver the generated second electronic certificate to the client device, where the first user obtains an allocation permission of a virtual object in a predetermined virtual object set when a category quantity of electronic certificates obtained by the client device reaches a predetermined threshold.

In this embodiment, a corresponding selection probability value is predetermined for each category of electronic certificate; and
machine executable instructions corresponding to electronic-certificate-based interaction logic that are stored in the memory are read and executed, to prompt the processor to:
randomly select the first electronic certificate for the first user from the electronic certificates held by the second user based on the selection probability value of each category of electronic certificate.

In this embodiment, machine executable instructions corresponding to electronic-certificate-based interaction logic that are stored in the memory are read and executed, to prompt the processor to:
perform weighting calculation on selection probability values of all categories of electronic certificates held by the second user, to obtain a drawing probability value corresponding to the first user; and
before generating the second electronic certificate of the same category as the first electronic certificate, the processor is further configured to:
determine, based on the drawing probability value, whether the first user draws the first electronic certificate; and
if yes, further generate the second electronic certificate of the same category as the first electronic certificate.

In this embodiment, machine executable instructions corresponding to electronic-certificate-based interaction logic that are stored in the memory are read and executed, to prompt the processor to:
receive an object allocation request sent by the client device, where the object allocation request includes several electronic certificates;
determine whether a category quantity of electronic certificates included in the object allocation request reaches a predetermined threshold; and
if the category quantity of electronic certificates included in the object allocation request reaches the predetermined threshold, allocate a virtual object to the first user from the predetermined virtual object set based on a predetermined allocation rule.

A person skilled in the art can easily figure out other implementation solutions of the present application after considering the specification and practicing the invention disclosed here. The present application is intended to cover any variations, functions, or adaptive changes of the present application. These variations, functions, or adaptive changes comply with general principles of the present application, and include common knowledge or a commonly used technical means in the technical field that is not disclosed in the present application. The specification and the embodiments are merely considered as examples, and the actual scope of the present application is pointed out by the following claims.

It is worthwhile to understand that the present application is not limited to the previously described accurate structures shown in the accompanying drawings, and various modifications and changes can be made without departing from the scope of the present application. The scope of the present application is limited only by the appended claims.

## Claims

1. An electronic-certificate-based interaction method, wherein the method comprises:
receiving, by a server, an electronic certificate acquisition request sent by a client device, wherein the electronic certificate acquisition request comprises a user identifier of a second user selected by a first user from a list of users that have social relationships with the first user and hold electronic certificates, the list of users being output by the client device;
in response to the electronic certificate acquisition request, selecting, by the server, a first electronic certificate from electronic certificates held by the second user, and
generating a second electronic certificate of a same category as the first electronic certificate, wherein a corresponding selection probability value is predetermined for each category of electronic certificate, and the selecting, by the server, a first electronic certificate from electronic certificates held by the second user comprises:
randomly selecting, by the server, the first electronic certificate for the first user from the electronic certificates held by the second user based on the selection probability value of each category of electronic certificate, wherein the first and the second electronic certificate comprises a character string, a number, and/or a password,
wherein each time the server generates the second electronic certificate, a quantity of duplicate times is calculated, and wherein before the selecting the first electronic certificate, the server checks whether a quantity of duplicate times of the first electronic certificate held by the second user reaches a predetermined threshold, and if the quantity of duplicate times of the first electronic certificate held by the second user reaches the predetermined threshold, the server directly terminates the generation of the second electronic certificate and returns prompt information to the client device that generating the second electronic certificate failed; and
delivering, by the server, the generated second electronic certificate to the client device, wherein the first user obtains an allocation permission of a virtual object in a predetermined virtual object set when a category quantity of electronic certificates obtained by the client device reaches a predetermined threshold.

2. The method according to claim 1, wherein the method further comprises:
performing, by the server, weighting calculation on selection probability values of all categories of electronic certificates held by the second user, to obtain a drawing probability value corresponding to the first user; and
before the generating a second electronic certificate of the same category as the first electronic certificate, the method further comprises:
determining, by the server, based on the drawing probability value, whether the first user draws the first electronic certificate; and
if yes, further generating the second electronic certificate of the same category as the first electronic certificate.

3. The method according to claim 1 or 2, wherein the method further comprises:
outputting (102), by the client device, in response to an interaction operation initiated by a first user, the list of users that have social relationships with the first user and hold electronic certificates;
obtaining (104), by the client device, the second user selected by the first user from the list of users;
sending, by the client device, the electronic certificate acquisition request to the server; and
obtaining (108), by the client device, the second electronic certificate delivered by the server, and locally storing the second electronic certificate.

4. The method according to claim 3, wherein the locally storing the obtained second electronic certificate comprises:
generating, by the client device, a corresponding display picture for the obtained second electronic certificate; and
adding, by the client device, the generated display picture to a display position corresponding to the second electronic certificate in an electronic certificate display interface,
wherein display pictures generated for different categories of electronic certificates are different from each other, and display positions corresponding to different categories of electronic certificates in the electronic certificate display interface are different from each other.

5. The method according to claim 4, wherein the electronic certificate display interface further comprises a display position corresponding to a virtual item; and
the method further comprises:
generating, by the client device, a corresponding display picture for an obtained virtual item; and
adding, by the client device, the generated display picture to a display position corresponding to the virtual item in an electronic certificate display interface.

6. The method according to claim 5, wherein the outputting, by the client device, in response to an interaction operation initiated by a first user, a list of users that have social relationships with the first user and hold electronic certificates comprises:
outputting, by the client device, a detail interface corresponding to the virtual item in response to a detected trigger operation of the first user for the generated display picture corresponding to the virtual item, wherein the detail interface comprises an interaction option; and
outputting, by the client device, an interaction interface corresponding to the interaction option in response to a trigger operation of the first user for the interaction option, and outputting the list of users that have social relationships with the first user and hold electronic certificates to the first user by using the interaction interface, the list of users being obtained from the server.

7. The method according to claim 3, wherein the sending, by the client device, an electronic certificate acquisition request to a server comprises:
outputting, by the client device, an electronic certificate selection interface to the first user, wherein the electronic certificate selection interface comprises several graphical options corresponding to the electronic certificates held by the second user; and
sending, by the client device, the electronic certificate acquisition request to the server in response to a trigger operation of the first user for any one of the several graphical options.

8. A non-volatile storage with computer program instructions stored thereon, wherein the instructions when run on a processor of an electronic device, configure the electronic device to perform a method according to any one of the preceding claims.

9. An electronic-certificate-based interaction system, wherein the system comprises:
a receiving module (701), configured to receive an electronic certificate acquisition request sent by a client device, wherein the electronic certificate acquisition request comprises a user identifier of a second user selected by a first user from a list of users that have social relationships with the first user and hold electronic certificates, the list of users being output by the client device;
a generation module (702), configured to: in response to the electronic certificate acquisition request, select a first electronic certificate from electronic certificates held by the second user, and generate a second electronic certificate of a same category as the first electronic certificate, wherein a corresponding selection probability value is predetermined for each category of electronic certificate, and selecting the first electronic certificate from electronic certificates held by the second user comprises:
randomly selecting, by the server, the first electronic certificate for the first user from the electronic certificates held by the second user based on the selection probability value of each category of electronic certificate, and wherein the first and the second electronic certificate comprises a character string, a number, and/or a password,
wherein each time the server generates the second electronic certificate, a quantity of duplicate times is calculated, and wherein before the selecting the first electronic certificate, the server checks whether a quantity of duplicate times of the first electronic certificate held by the second user reaches a predetermined threshold, and if the quantity of duplicate times of the first electronic certificate held by the second user reaches the predetermined threshold, the server directly terminates the generation of the second electronic certificate and returns prompt information to the client device that generating the second electronic certificate failed; and
a delivery module (703), configured to deliver the generated second electronic certificate to the client device, wherein the first user obtains an allocation permission of a virtual object in a predetermined virtual object set when a category quantity of electronic certificates obtained by the client device reaches a predetermined threshold.

## Patentansprüche

1. Interaktionsverfahren auf der Basis elektronischer Zertifikate, wobei das Verfahren folgende Schritte umfasst:
Empfangen einer von einer Client-Vorrichtung gesendeten Anforderung zur Erfassung elektronischer Zertifikate durch einen Server, wobei die Anforderung zur Erfassung elektronischer Zertifikate eine Benutzerkennung eines zweiten Benutzers umfasst, der von einem ersten Benutzer aus einer Liste von Benutzern ausgewählt wird, die soziale Beziehungen zu dem ersten Benutzer haben und elektronische Zertifikate halten, wobei die Liste von Benutzern von der Client-Vorrichtung ausgegeben wird;
als Reaktion auf die Anforderung zur Erfassung elektronischer Zertifikate, Auswählen eines ersten elektronischen Zertifikats aus elektronischen Zertifikaten, die von dem zweiten Benutzer gehalten werden, durch den Server und Erzeugen eines zweiten elektronischen Zertifikats derselben Kategorie wie das erste elektronische Zertifikat,
wobei ein entsprechender Auswahlwahrscheinlichkeitswert für jede Kategorie elektronischer Zertifikate vorbestimmt ist, und das Auswählen eines ersten elektronischen Zertifikats aus elektronischen Zertifikaten, die von dem zweiten Benutzer gehalten werden, durch den Server Folgendes umfasst: zufälliges Auswählen des ersten elektronischen Zertifikats für den ersten Benutzer aus den elektronischen Zertifikaten, die von dem zweiten Benutzer gehalten werden, durch den Server auf der Basis des Auswahlwahrscheinlichkeitswerts jeder Kategorie elektronischer Zertifikate,
wobei das erste und das zweite elektronische Zertifikat eine Zeichenkette, eine Zahl und/oder ein Passwort umfassen, wobei jedes Mal, wenn der Server das zweite elektronische Zertifikat erzeugt, eine Anzahl von Duplizierungen berechnet wird, und
wobei der Server vor dem Auswählen des ersten elektronischen Zertifikats prüft, ob eine Anzahl von Duplizierungen des ersten elektronischen Zertifikats, das von dem zweiten Benutzer gehalten wird, einen vorbestimmten Schwellenwert erreicht, und
wenn die Anzahl von Duplizierungen des ersten elektronischen Zertifikats, das von dem zweiten Benutzer gehalten wird, den vorbestimmten Schwellenwert erreicht, der Server die Erzeugung des zweiten elektronischen Zertifikats direkt beendet und Aufforderungsinformationen an die Client-Vorrichtung zurücksendet, dass das Erzeugen des zweiten elektronischen Zertifikats fehlgeschlagen ist; und
Liefern des erzeugten zweiten elektronischen Zertifikats an die Client-Vorrichtung durch den Server, wobei der erste Benutzer eine Zuweisungsberechtigung eines virtuellen Objekts in einem vorbestimmten virtuellen Objektsatz erhält, wenn eine Kategoriemenge elektronischer Zertifikate, die von der Client-Vorrichtung erhalten wird, einen vorbestimmten Schwellenwert erreicht.

2. Verfahren nach Anspruch 1, wobei das Verfahren ferner folgende Schritte umfasst:
Durchführen einer Gewichtungsberechnung an Auswahlwahrscheinlichkeitswerten aller Kategorien elektronischer Zertifikate, die von dem zweiten Benutzer gehalten werden, durch den Server, um einen Zeichnungswahrscheinlichkeitswert zu erhalten, der dem ersten Benutzer entspricht; und
wobei das Verfahren vor dem Erzeugen eines zweiten elektronischen Zertifikats derselben Kategorie wie das erste elektronische Zertifikat ferner Folgendes umfasst:
Bestimmen durch den Server auf der Basis des Zeichnungswahrscheinlichkeitswerts, ob der erste Benutzer das erste elektronische Zertifikat zeichnet; und
wenn ja, ferner Erzeugen des zweiten elektronischen Zertifikats derselben Kategorie wie das erste elektronische Zertifikat.

3. Verfahren nach Anspruch 1 oder 2, wobei das Verfahren ferner folgende Schritte umfasst:
Ausgeben (102) der Liste von Benutzern, die soziale Beziehungen zu dem ersten Benutzer haben und elektronische Zertifikate halten, durch die Client-Vorrichtung als Reaktion auf eine von einem ersten Benutzer eingeleitete Interaktionsoperation;
Erhalten (104) des von dem ersten Benutzer aus der Liste von Benutzern ausgewählten zweiten Benutzers durch die Client- Vorrichtung;
Senden der Anforderung zur Erfassung elektronischer Zertifikate durch die Client-Vorrichtung an den Server; und
Erhalten (108) des von dem Server gelieferten zweiten elektronischen Zertifikats und lokales Speichern des zweiten elektronischen Zertifikats durch die Client-Vorrichtung.

4. Verfahren nach Anspruch 3, wobei das lokale Speichern des erhaltenen zweiten elektronischen Zertifikats folgende Schritte umfasst:
Erzeugen eines entsprechenden Anzeigebildes für das erhaltene zweite elektronische Zertifikat durch die Client-Vorrichtung; und
Hinzufügen des erzeugten Anzeigebildes zu einer Anzeigeposition, die dem zweiten elektronischen Zertifikat in einer Anzeigeschnittstelle für elektronische Zertifikate entspricht, durch die Client-Vorrichtung,
wobei Anzeigebilder, die für verschiedene Kategorien elektronischer Zertifikate erzeugt werden, voneinander verschieden sind und Anzeigepositionen, die verschiedenen Kategorien elektronischer Zertifikate in der Anzeigeschnittstelle für elektronische Zertifikate entsprechen, voneinander verschieden sind.

5. Verfahren nach Anspruch 4, wobei die Anzeigeschnittstelle für elektronische Zertifikate ferner eine Anzeigeposition umfasst, die einem virtuellen Element entspricht; und
das Verfahren ferner folgende Schritte umfasst:
Erzeugen eines entsprechenden Anzeigebildes für ein erhaltenes virtuelles Element durch die Client-Vorrichtung; und
Hinzufügen des erzeugten Anzeigebildes zu einer Anzeigeposition, die dem virtuellen Element in einer Anzeigeschnittstelle für elektronische Zertifikate entspricht, durch die Client-Vorrichtung.

6. Verfahren nach Anspruch 5, wobei das Ausgeben einer Liste von Benutzern, die soziale Beziehungen zu dem ersten Benutzer haben und elektronische Zertifikate halten, durch die Client-Vorrichtung als Reaktion auf eine von einem ersten Benutzer eingeleitete Interaktionsoperation folgende Schritte umfasst:
Ausgeben einer Detailschnittstelle, die dem virtuellen Element entspricht, durch die Client-Vorrichtung als Reaktion auf eine detektierte Auslöseoperation des ersten Benutzers für das erzeugte Anzeigebild, das dem virtuellen Element entspricht, wobei die Detailschnittstelle eine Interaktionsoption umfasst; und
Ausgeben einer Interaktionsschnittstelle, die der Interaktionsoption entspricht, durch die Client-Vorrichtung als Reaktion auf eine Auslöseoperation des ersten Benutzers für die Interaktionsoption und Ausgeben der Liste von Benutzern, die soziale Beziehungen zu dem ersten Benutzer haben und elektronische Zertifikate halten, an den ersten Benutzer unter Verwendung der Interaktionsschnittstelle, wobei die Liste von Benutzern von dem Server erhalten wird.

7. Verfahren nach Anspruch 3, wobei das Senden einer Anforderung zur Erfassung elektronischer Zertifikate durch die Client-Vorrichtung an einen Server folgende Schritte umfasst:
Ausgeben einer Auswahlschnittstelle für elektronische Zertifikate durch die Client-Vorrichtung an den ersten Benutzer, wobei die Auswahlschnittstelle für elektronische Zertifikate mehrere grafische Optionen umfasst, die den elektronischen Zertifikaten entsprechen, die von dem zweiten Benutzer gehalten werden; und
Senden der Anforderung zur Erfassung elektronischer Zertifikate durch die Client-Vorrichtung an den Server als Reaktion auf eine Auslöseoperation des ersten Benutzers für eine beliebige der mehreren grafischen Optionen.

8. Nichtflüchtiger Speicher mit darauf gespeicherten Computerprogrammbefehlen, wobei die Befehle, wenn sie auf einem Prozessor einer elektronischen Vorrichtung ausgeführt werden, die elektronische Vorrichtung einrichten, ein Verfahren nach einem der vorhergehenden Ansprüche durchzuführen.

9. Interaktionssystem auf der Basis elektronischer Zertifikate, wobei das System Folgendes umfasst:
ein Empfangsmodul (701), das eingerichtet ist, eine von einer Client-Vorrichtung gesendete Anforderung zur Erfassung elektronischer Zertifikate zu empfangen, wobei die Anforderung zur Erfassung elektronischer Zertifikate eine Benutzerkennung eines zweiten Benutzers umfasst, der von einem ersten Benutzer aus einer Liste von Benutzern ausgewählt wird, die soziale Beziehungen zu dem ersten Benutzer haben und elektronische Zertifikate halten, wobei die Liste von Benutzern von der Client-Vorrichtung ausgegeben wird;
ein Erzeugungsmodul (702), das eingerichtet ist: als Reaktion auf die Anforderung zur Erfassung elektronischer Zertifikate ein erstes elektronisches Zertifikat aus elektronischen Zertifikaten auszuwählen, die von dem zweiten Benutzer gehalten werden, und ein zweites elektronisches Zertifikat derselben Kategorie wie das erste elektronische Zertifikat zu erzeugen, wobei ein entsprechender Auswahlwahrscheinlichkeitswert für jede Kategorie elektronischer Zertifikate vorbestimmt ist, und das Auswählen des ersten elektronischen Zertifikats aus elektronischen Zertifikaten, die von dem zweiten Benutzer gehalten werden, Folgendes umfasst: zufälliges Auswählen des ersten elektronischen Zertifikats für den ersten Benutzer aus den elektronischen Zertifikaten, die von dem zweiten Benutzer gehalten werden, durch den Server auf der Basis des Auswahlwahrscheinlichkeitswerts jeder Kategorie elektronischer Zertifikate, und wobei das erste und das zweite elektronische Zertifikat eine Zeichenkette, eine Zahl und/oder ein Passwort umfassen,
wobei jedes Mal, wenn der Server das zweite elektronische Zertifikat erzeugt, eine Anzahl von Duplizierungen berechnet wird, und wobei der Server vor dem Auswählen des ersten elektronischen Zertifikats prüft, ob eine Anzahl von Duplizierungen des ersten elektronischen Zertifikats, das von dem zweiten Benutzer gehalten wird, einen vorbestimmten Schwellenwert erreicht, und wenn die Anzahl von Duplizierungen des ersten elektronischen Zertifikats, das von dem zweiten Benutzer gehalten wird, den vorbestimmten Schwellenwert erreicht, der Server die Erzeugung des zweiten elektronischen Zertifikats direkt beendet und Aufforderungsinformationen an die Client-Vorrichtung zurücksendet, dass das Erzeugen des zweiten elektronischen Zertifikats fehlgeschlagen ist; und
ein Liefermodul (703), das eingerichtet ist, das erzeugte zweite elektronische Zertifikat an die Client-Vorrichtung zu liefern, wobei der erste Benutzer eine Zuweisungsberechtigung eines virtuellen Objekts in einem vorbestimmten virtuellen Objektsatz erhält, wenn eine Kategoriemenge elektronischer Zertifikate, die von der Client-Vorrichtung erhalten wird, einen vorbestimmten Schwellenwert erreicht.

## Revendications

1. Procédé d'interaction basé sur un certificat électronique, dans lequel le procédé comprend :
la réception, par un serveur, d'une demande d'acquisition de certificat électronique envoyée par un dispositif client, dans lequel la demande d'acquisition de certificat électronique comprend un identifiant d'utilisateur d'un second utilisateur sélectionné par un premier utilisateur à partir d'une liste d'utilisateurs qui ont des relations sociales avec le premier utilisateur et détiennent des certificats électroniques, la liste d'utilisateurs étant délivrée en sortie par le dispositif client ;
en réponse à la demande d'acquisition de certificat électronique, la sélection, par le serveur, d'un premier certificat électronique à partir de certificats électroniques détenus par le second utilisateur, et la génération d'un second certificat électronique d'une même catégorie que le premier certificat électronique, dans lequel une valeur de probabilité de sélection correspondante est prédéterminée pour chaque catégorie de certificat électronique, et la sélection, par le serveur, d'un premier certificat électronique à partir de certificats électroniques détenus par le second utilisateur comprend : la sélection aléatoire, par le serveur, du premier certificat électronique pour le premier utilisateur à partir des certificats électroniques détenus par le second utilisateur sur la base de la valeur de probabilité de sélection de chaque catégorie de certificat électronique, dans lequel les premier et second certificats électroniques comprennent une chaîne de caractères, un nombre, et/ou un mot de passe, dans lequel chaque fois que le serveur génère le second certificat électronique, une quantité de doublons est calculée, et dans lequel avant la sélection du premier certificat électronique, le serveur vérifie si une quantité de doublons du premier certificat électronique détenu par le second utilisateur atteint un seuil prédéterminé, et si la quantité de doublons du premier certificat électronique détenu par le second utilisateur atteint le seuil prédéterminé, le serveur termine directement la génération du second certificat électronique et renvoie des informations d'invite au dispositif client indiquant que la génération du second certificat électronique a échoué ; et
la remise, par le serveur, du second certificat électronique généré au dispositif client, dans lequel le premier utilisateur obtient une permission d'attribution d'un objet virtuel dans un ensemble d'objets virtuels prédéterminé lorsqu'une quantité de catégorie de certificats électroniques obtenus par le dispositif client atteint un seuil prédéterminé.

2. Procédé selon la revendication 1, dans lequel le procédé comprend en outre :
la réalisation, par le serveur, d'un calcul de pondération sur des valeurs de probabilité de sélection de toutes les catégories de certificats électroniques détenus par le second utilisateur, pour obtenir une valeur de probabilité de dessin correspondant au premier utilisateur ; et
avant la génération d'un second certificat électronique de la même catégorie que le premier certificat électronique, le procédé comprend en outre :
la détermination, par le serveur, sur la base de la valeur de probabilité de dessin, si le premier utilisateur dessine le premier certificat électronique ; et
si oui, la génération supplémentaire du second certificat électronique de la même catégorie que le premier certificat électronique.

3. Procédé selon la revendication 1 ou 2, dans lequel le procédé comprend en outre :
la délivrance en sortie (102), par le dispositif client, en réponse à une opération d'interaction initiée par un premier utilisateur, de la liste d'utilisateurs qui ont des relations sociales avec le premier utilisateur et détiennent des certificats électroniques ; l'obtention (104), par le dispositif client, du second utilisateur sélectionné par le premier utilisateur à partir de la liste d'utilisateurs ;
l'envoi, par le dispositif client, de la demande d'acquisition de certificat électronique au serveur ; et
l'obtention (108), par le dispositif client, du second certificat électronique remis par le serveur, et le stockage local du second certificat électronique.

4. Procédé selon la revendication 3, dans lequel le stockage local du second certificat électronique obtenu comprend :
la génération, par le dispositif client, d'une image d'affichage correspondante pour le second certificat électronique obtenu ; et
l'ajout, par le dispositif client, de l'image d'affichage générée à une position d'affichage correspondant au second certificat électronique dans une interface d'affichage de certificat électronique,
dans lequel des images d'affichage générées pour différentes catégories de certificats électroniques sont différentes les unes des autres, et des positions d'affichage correspondant à différentes catégories de certificats électroniques dans l'interface d'affichage de certificat électronique sont différentes les unes des autres.

5. Procédé selon la revendication 4, dans lequel l'interface d'affichage de certificat électronique comprend en outre une position d'affichage correspondant à un élément virtuel ; et
le procédé comprend en outre :
la génération, par le dispositif client, d'une image d'affichage correspondante pour un élément virtuel obtenu ; et
l'ajout, par le dispositif client, de l'image d'affichage générée à une position d'affichage correspondant à l'élément virtuel dans une interface d'affichage de certificat électronique.

6. Procédé selon la revendication 5, dans lequel la délivrance en sortie, par le dispositif client, en réponse à une opération d'interaction initiée par un premier utilisateur, d'une liste d'utilisateurs qui ont des relations sociales avec le premier utilisateur et détiennent des certificats électroniques, comprend :
la délivrance en sortie, par le dispositif client, d'une interface de détail correspondant à l'élément virtuel en réponse à une opération de déclenchement détectée du premier utilisateur pour l'image d'affichage générée correspondant à l'élément virtuel, dans lequel l'interface de détail comprend une option d'interaction ; et
la délivrance en sortie, par le dispositif client, d'une interface d'interaction correspondant à l'option d'interaction en réponse à une opération de déclenchement du premier utilisateur pour l'option d'interaction, et la délivrance en sortie de la liste d'utilisateurs qui ont des relations sociales avec le premier utilisateur et détiennent des certificats électroniques au premier utilisateur en utilisant l'interface d'interaction, la liste d'utilisateurs étant obtenue à partir du serveur.

7. Procédé selon la revendication 3, dans lequel l'envoi par le dispositif client d'une demande d'acquisition de certificat électronique à un serveur comprend :
la délivrance en sortie, par le dispositif client, d'une interface de sélection de certificat électronique au premier utilisateur, dans lequel l'interface de sélection de certificat électronique comprend plusieurs options graphiques correspondant aux certificats électroniques détenus par le second utilisateur ; et
l'envoi, par le dispositif client, de la demande d'acquisition de certificat électronique au serveur en réponse à une opération de déclenchement du premier utilisateur pour l'une quelconque des plusieurs options graphiques.

8. Stockage non volatil sur lequel sont stockées des instructions de programme informatique, dans lequel les instructions, lorsqu'elles sont exécutées sur un processeur d'un dispositif électronique, configurent le dispositif électronique pour réaliser un procédé selon l'une quelconque des revendications précédentes.

9. Système d'interaction basé sur un certificat électronique, dans lequel le système comprend :
un module de réception (701), configuré pour recevoir une demande d'acquisition de certificat électronique envoyée par un dispositif client, dans lequel la demande d'acquisition de certificat électronique comprend un identifiant d'utilisateur d'un second utilisateur sélectionné par un premier utilisateur à partir d'une liste d'utilisateurs qui ont des relations sociales avec le premier utilisateur et détiennent des certificats électroniques, la liste d'utilisateurs étant délivrée en sortie par le dispositif client ;
un module de génération (702), configuré pour : en réponse à la demande d'acquisition de certificat électronique, sélectionner un premier certificat électronique à partir de certificats électroniques détenus par le second utilisateur, et générer un second certificat électronique d'une même catégorie que le premier certificat électronique,
dans lequel une valeur de probabilité de sélection correspondante est prédéterminée pour chaque catégorie de certificat électronique, et la sélection du premier certificat électronique à partir de certificats électroniques détenus par le second utilisateur comprend : la sélection aléatoire, par le serveur, du premier certificat électronique pour le premier utilisateur à partir des certificats électroniques détenus par le second utilisateur sur la base de la valeur de probabilité de sélection de chaque catégorie de certificat électronique, et dans lequel les premier et second certificats électroniques comprennent une chaîne de caractères, un nombre, et/ou un mot de passe, dans lequel chaque fois que le serveur génère le second certificat électronique, une quantité de doublons est calculée, et dans lequel avant la sélection du premier certificat électronique, le serveur vérifie si une quantité de doublons du premier certificat électronique détenu par le second utilisateur atteint un seuil prédéterminé, et si la quantité de doublons du premier certificat électronique détenu par le second utilisateur atteint le seuil prédéterminé, le serveur termine directement la génération du second certificat électronique et renvoie des informations d'invite au dispositif client indiquant que la génération du second certificat électronique a échoué ; et
un module de remise (703), configuré pour remettre le second certificat électronique généré au dispositif client, dans lequel le premier utilisateur obtient une permission d'attribution d'un objet virtuel dans un ensemble d'objets virtuels prédéterminé lorsqu'une quantité de catégorie de certificats électroniques obtenus par le dispositif client atteint un seuil prédéterminé.
